# EUROPEAN PATENT APPLICATION

(11) **EP 4 137 925 A1**
(43) Date of publication of application: **22.02.2023**
(21) Application number: 22184736.1
(22) Date of filing: 13.07.2022
(51) Int. Cl.: G06F 3/12, H04N 1/32

(54) **COMPUTER READABLE MEDIUM**

(30) Priority: 19.08.2021 US 202117406230
(71) Applicant: Toshiba TEC Kabushiki Kaisha, Tokyo 141-8562 (JP)
(72) Inventor: Ogiwara, Takashi, Shinagawa-ku, Tokyo 141-8562 (JP); Yoshida, Masafumi, Shinagawa-ku, Tokyo 141-8562 (JP); Takeshita, Kazuyoshi, Shinagawa-ku, Tokyo 141-8562 (JP)
(74) Representative: Bandpay & Greuter

(57) **Abstract**

According to at least one embodiment, there is provided a non-transitory computer-readable medium storing computer-executable instructions that, when executed by one or more processors, perform operations. The operation include inputting a designation of a target image to be formed, acquiring message data, the message data including at least one of video image data and voice data, storing the acquired message data in a storage device, and instructing an image forming apparatus to form an image designated as the target image and to form an image representing an identifier for identifying the message data stored in the storage device.

## Description

### FIELD

Embodiments described herein relate generally to a computer readable medium.

### BACKGROUND

If a document printed by a printer is delivered to a recipient other than an instructor who instructs printing and any message about the document needs to be conveyed from the instructor to the recipient, the message is generally transmitted verbally or by attaching a memo.

### DISCLOSURE OF THE INVENTION

To this end, there is provided a non-transitory computer-readable medium storing computer-executable instructions that, when executed by one or more processors, perform operations comprising: inputting a designation of a target image to be formed; acquiring message data, the message data comprising at least one of video image data and voice data; storing the acquired message data in a storage device; and instructing an image forming apparatus to form an image designated as the target image and to form an image representing an identifier for identifying the message data stored in the storage device.

The operations may further comprise: causing a display to display a user interface screen for operating at least one of a video recording function and a sound recording function provided in the computer; and controlling the video recording function and the sound recording function in response to an operation on the user interface screen displayed.

The operations may further comprise: generating an additional image representing the identifier as an image on the same page as the image designated as the target image; and instructing the image forming apparatus to form the image on the page.

Preferably, the generated additional image is combined with the image designated as the target image.

The operations may further comprise: generating an additional image representing the identifier as an image on a page different from the image designated as the target image; and instructing the image forming apparatus to form the image designated as the target image and to form the generated additional image.

Preferably, the storage device is provided in the image forming apparatus, and the image forming apparatus is configured to store the acquired message data in the storage device.

The operations may further comprise: instructing the image forming apparatus to execute image formation in response to an operation for instructing execution of image formation; and requesting the image forming apparatus to store the acquired message data in the storage device in response to the operation.

Preferably, the operations further comprise instructing the image forming apparatus to form an image including the identifier for identifying the message data stored in the storage device and representing an address for accessing the message data via a communication network.

Preferably, the operations further comprise instructing the image forming apparatus to form an image representing a uniform resource locator (URL) as the address.

The operations may further comprise instructing the image forming apparatus to form an image including the identifier for identifying the message data stored in the storage device and representing a visible code that enables an address for accessing the message data via the communication network to be optically readable.

The present invention further relates to an information processing system comprising: a processor configured to: input a designation of a target image to be formed; acquire message data, the message data comprising at least one of video image data and voice data; store the acquired message data; and instruct an image forming apparatus to form an image designated as the target image and to form an image representing an identifier for identifying the message data stored.

The processor may be further configured to: cause a display for operating at least one of a video recording function and a sound recording function; and
control the video recording function and the sound recording function in response to an operation on the display.

The processor may be further configured to: generate an additional image representing the identifier as an image on the same page as the image designated as the target image; and instruct the image forming apparatus to form the image on the page.

Preferably, the generated additional image is combined with the image designated as the target image.

Preferably, the processor is further configured to: generate an additional image representing the identifier as an image on a page different from the image designated as the target image; and instruct the image forming apparatus to form the image designated as the target image and to form the generated additional image.

Preferably, the image forming apparatus is configured to store the acquired message data in the storage device.

The processor may be further configured to instruct the image forming apparatus to execute image formation in response to an operation for instructing execution of image formation; and request the image forming apparatus to store the acquired message data in the storage device in response to the operation.

Preferably, the processor is further configured to instruct the image forming apparatus to form an image including the identifier for identifying the message data stored and representing an address for accessing the message data via a communication network.

The processor may be further configured to instruct the image forming apparatus to form an image representing a uniform resource locator (URL) as the address.

The processor may be further configured to processor is further configured to instruct the image forming apparatus to form an image including the identifier for identifying the message data stored and representing a visible code that enables an address for accessing the message data via the communication network to be optically readable.

The present invention further relates to an information processing method comprising steps of: inputting a designation of a target image to be formed; acquiring message data, the message data comprising at least one of video image data and voice data; storing the acquired message data in a storage device; and instructing an image forming apparatus to form an image designated as the target image and to form an image representing an identifier for identifying the message data stored in the storage device.

### DESCRIPTION OF THE DRAWINGS

FIG. 1 is a block diagram illustrating a configuration of an information processing system of an example embodiment;
FIG. 2 is a flowchart of a drive process by a processor in FIG. 1;
FIG. 3 is another flowchart of the drive process;
FIG. 4 is another flowchart of the drive process;
FIG. 5 is a diagram illustrating an example of a property screen illustrating properties related to a category called "standard";
FIG. 6 is a diagram illustrating an example of the property screen in a video recording state; and
FIG. 7 is a diagram illustrating an example of one page of a document printed based on edited print data.

### DETAILED DESCRIPTION

In general, according to at least one embodiment, a non-transitory computer readable medium storing a computer program which is executed by a computer is provided to provide the steps of: inputting designation of a target image to be formed, acquiring at least one of video image data and voice data as message data, storing the acquired message data in a storage device, and instructing an image forming apparatus to form an image designated as the target image by the input designation and to form an image representing an identifier for identifying the message data stored in the storage device.

Hereinafter, at least one embodiment will be described with reference to the drawings. In at least one embodiment, an information processing system that uses a printer driver, which is a computer program stored in storage media of the at least one embodiment, will be described.

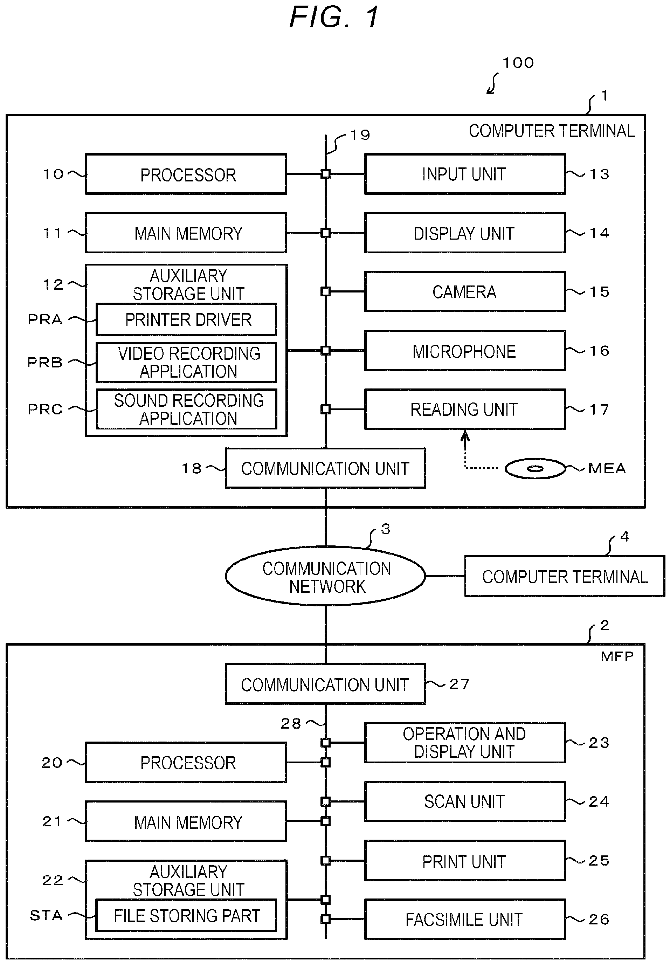

FIG. 1 is a block diagram illustrating a configuration of an information processing system 100.

The information processing system 100 is configured so that a computer terminal 1 and a multifunction peripheral (MFP) 2 can communicate with each other via a communication network 3.

The computer terminal 1 is an information processing terminal used by an instructor who instructs printing of any document in order to request the MFP 2 to print the document via the communication network 3.

The MFP 2 is an apparatus provided with functions as a copier, a scanner, a printer, a facsimile machine, and the like complexly. In particular, the MFP 2 is provided with at least a network print function of printing the document in response to a print instruction via the communication network 3.

As the communication network 3, the Internet, virtual private network (VPN), local area network (LAN), public communication network, mobile communication network, and the like can be used alone or in an appropriate combination. As the communication network 3, the LAN is used as an example.

As illustrated in FIG. 1 for a main circuit configuration of the computer terminal 1, the computer terminal 1 includes a processor 10, a main memory 11, an auxiliary storage unit 12 (e.g., and auxiliary memory), an input unit 13 (e.g., an input device), a display unit 14 (e.g., a display), a camera 15, a microphone 16, a reading unit 17 (e.g., a reading device), a communication unit 18 (e.g., a communication device), a transmission line 19, and the like.

A computer that performs information processing is configured by connecting the processor 10, the main memory 11, and the auxiliary storage unit 12 via the transmission line 19.

The processor 10 corresponds to a central portion of the computer. The processor 10 executes information processing according to an information processing program such as an operating system, middleware, and an application program.

The main memory 11 corresponds to a main memory portion of the computer. The main memory 11 includes a non-volatile memory area and a volatile memory area. The main memory 11 stores the information processing program in the non-volatile memory area. The main memory 11 may store data needed for the processor 10 to execute a process for controlling each part in the non-volatile or volatile memory area. In the main memory 11, the volatile memory area is used as a work area where data is appropriately rewritten by the processor 10.

The auxiliary storage unit 12 corresponds to an auxiliary storage portion of the computer. As the auxiliary storage unit 12, for example, an electric erasable programmable read-only memory (EEPROM), a hard disk drive (HDD), a solid state drive (SSD), or various other well-known storage devices can be used alone or in an appropriate combination. The auxiliary storage unit 12 stores data used by the processor 10 for performing various processes and data generated by the processes in the processor 10. The auxiliary storage unit 12 stores the information processing program.

The input unit 13 receives various instructions by an operator. As the input unit 13, a well-known input device such as a touch sensor, a keyboard, or a mouse can be applied alone or in combination.

The display unit 14 displays various screens for notifying the operator of various information. As the display unit 14, a well-known display device such as a liquid crystal display device can be applied.

The camera 15 includes an optical system and an image sensor, and generates video image data representing an image in a field of view formed by the optical system by the image sensor.

If a voice is input, the microphone 16 generates voice data according to the voice.

The reading unit 17 reads data recorded on computer readable media MEA. The media MEA is typically an optical disk such as a CD-ROM. In this case, the reading unit 17 can be configured to include an existing CD-ROM reader. However, as the media MEA, another type of disk-shaped recording media such as a magnetic disk or a magneto-optical disk may be used. As the media MEA, any other form of recording media such as a memory card may be used. The reading unit 17 includes one or more of a variety of well-known devices adapted to read data from recording media that can be used as the media MEA.

The communication unit 18 is an interface for data communication via the communication network 3. As the communication unit 18, for example, a well-known communication device for performing data communication via a mobile communication network can be used. If the communication network 3 is the LAN, the communication unit 18 is provided with, for example, an existing communication device for LAN communication.

The transmission line 19 includes an address bus, a data bus, a control signal line, and the like, and transmits data and control signals transmitted and received between the connected parts.

The auxiliary storage unit 12 stores a printer driver PRA, a video recording application PRB, and a sound recording application PRC. The printer driver PRA is an information processing program that describes information processing for instructing the MFP 2 to print a document. The video recording application PRB is an application program and generates a multimedia file in a predetermined file format, based on video image data output from the camera 15 and voice data output from the microphone 16. The file format of the multimedia file is, for example, MP4. The sound recording application PRC is an application program and generates a voice file in a predetermined file format based on the voice data output from the microphone 16.

As hardware of the computer terminal 1, a general-purpose computer device provided with a communication function via the communication network 3 can be used. The printer driver PRA is recorded in, for example, the media MEA and provided to a user of the computer terminal 1. Then, the printer driver PRA read by the reading unit 17 from the media MEA is stored in the auxiliary storage unit 12 under the control of the processor 10 in response to an instruction from the user or the like. The video recording application PRB and the sound recording application PRC may be programs pre-installed in many computer devices, may be installed with, for example, a program recorded on a portable medium, or may be downloaded and installed via the communication network 3. The format of the voice file is, for example, MP3.

The MFP 2 includes a processor 20, a main memory 21, an auxiliary storage unit 22 (e.g., an auxiliary memory), an operation and display unit 23 (e.g., a display), a scan unit 24 (e.g., a scanner), a print unit 25 (e.g., a printer), a facsimile unit 26 (a facsimile machine), a communication unit 27 (e.g., a communication device), a transmission line 28, and the like. The processor 20, the main memory 21, the auxiliary storage unit 22, the operation and display unit 23, the scan unit 24, the print unit 25, the facsimile unit 26, and the communication unit 27 are connected via the transmission line 28.

A computer that performs information processing for controlling the MFP 2 is configured by connecting the processor 20, the main memory 21, and the auxiliary storage unit 22 via the transmission line 28.

The processor 20 corresponds to the central portion of the computer. The processor 20 executes information processing for controlling each part in order to realize various functions as the MFP 2, according to an information processing program such as an operating system, middleware, and an application program.

The main memory 21 corresponds to a main memory portion of the computer. The main memory 21 includes a non-volatile memory area and a volatile memory area. The main memory 21 stores the information processing program in the non-volatile memory area. The main memory 21 may store data needed for the processor 20 to execute a process for controlling each part in the non-volatile or volatile memory area. In the main memory 21, the volatile memory area is used as a work area where data is appropriately rewritten by the processor 20.

The auxiliary storage unit 22 corresponds to an auxiliary storage portion of the computer. As the auxiliary storage unit 22, for example, the EEPROM, HDD, SSD, or various other well-known storage devices can be used. The auxiliary storage unit 22 stores data used by the processor 20 for performing various processes and data generated by the processes in the processor 20. The storage area of the auxiliary storage unit 22 is used as a file storing part STA for storing a message file described later.

The operation and display unit 23 receives an operation by the user of the MFP 2 and displays various information for presenting to the user. The operation and display unit 23 may appropriately include various operation devices and display devices such as a touch panel, a keyboard, a key switch, an LED lamp, or a liquid crystal display panel.

The scan unit 24 reads an original document and generates image data of an image represented on the original document.

The print unit 25 prints the image indicated by the image data on a recording paper. The print unit 25 includes a well-known print device such as an electrophotographic image forming unit (e.g., an electrophotographic image forming device).

The facsimile unit 26 performs various well-known processes for performing image communication conforming to the facsimile standard via a communication network (not illustrated) such as a public switched telephone network (PSTN).

The communication unit 27 executes a communication process for performing data communication via the communication network 3. As the communication unit 27, for example, an existing communication device for LAN can be used.

The transmission line 28 includes an address bus, a data bus, a control signal line, and the like, and transmits data and control signals transmitted and received between the connected parts.

Next, an action of the information processing system 100 configured as described above will be described. In the following, an action when printing a document using the network print function of the MFP 2 in response to a command from the computer terminal 1 will be mainly described. The contents of various actions and various processes described below are examples, and change in the order of some actions and processes, omission of some actions and processes, or addition of another action and process can be done appropriately.

If the processor 10 receives some instruction about printing using the MFP 2 while executing information processing according to an application program such as a word processor that handles a document, the processor 10 starts a drive process based on the printer driver PRA.

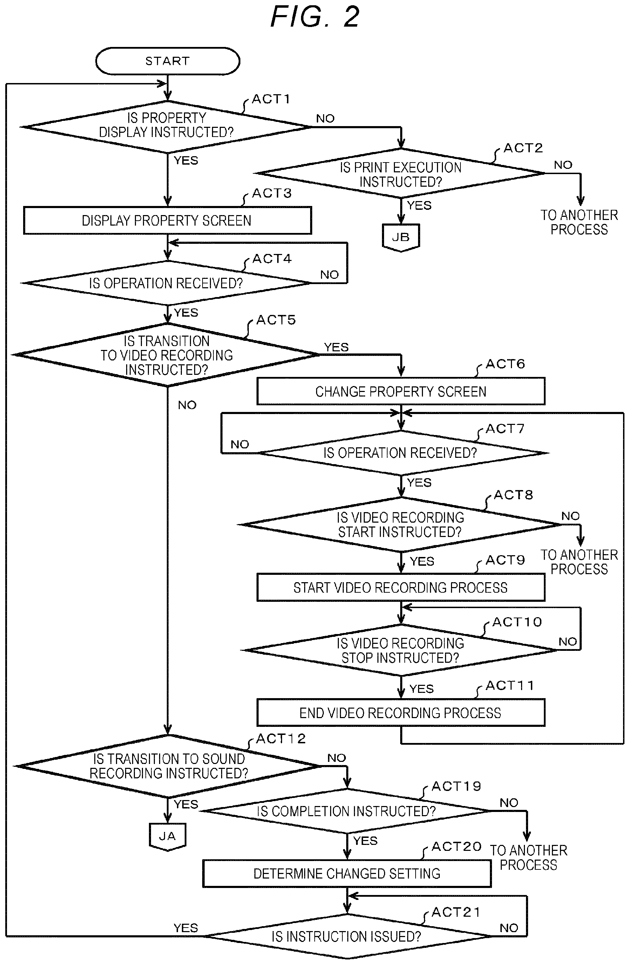

FIG. 2, FIG. 3, and FIG. 4 are flowcharts of the drive process by the processor 10.

As ACT 1, the processor 10 checks whether or not display of a property is instructed. Then, if the corresponding event cannot be checked, the processor 10 determines that the result is NO and proceeds to ACT 2.

As ACT 2, the processor 10 checks whether or not print execution is instructed. Then, if the corresponding event cannot be checked, the processor 10 determines that the result is NO and proceeds to another process. Another process is a process for checking contents of an instruction and executing a function according to the contents of the instruction. The processor 10 may return to ACT 1 after executing another process. The processor 10 may end the drive process after executing another process.

If the instructor who intends to instruct printing of the document using the computer terminal 1 wants to check and change the property of the MFP 2, or if the instructor wants to record a message about the document intended to be printed, the instructor instructs the display of the property by, for example, a predetermined operation in the input unit 13. Then, if the display of the property is instructed in this way, the processor 10 determines in ACT 1 that the result is YES and proceeds to ACT 3.

As ACT 3, the processor 10 causes the display unit 14 to display a property screen. The property screen represents the current property of the network print function of MFP 2. The property screen is also a graphic user interface (GUI) screen for changing the property.

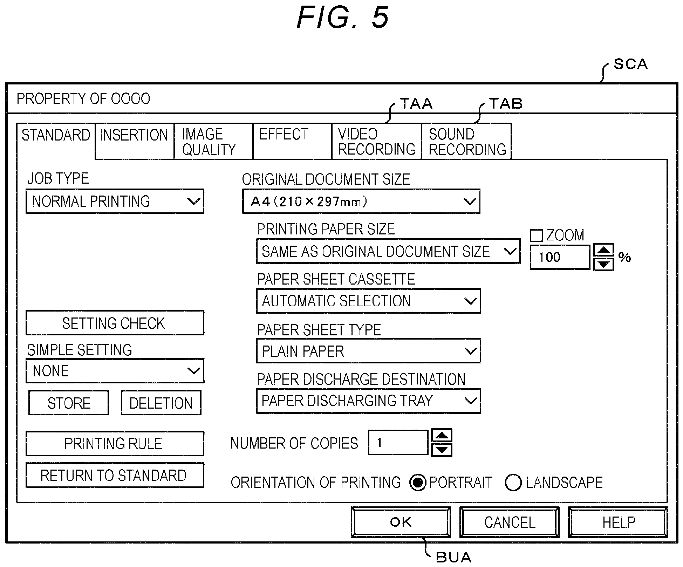

FIG. 5 is a diagram illustrating an example of a property screen SCA.

The property screen SCA illustrated in FIG. 5 represents a property related to a category called "standard".

The property screen SCA includes tabs TAA and TAB, and a button BUA. The tab TAA is a GUI element for instructing transition to a state of performing video recording for recording a message attached to the document to be printed. The tab TAB is a GUI element for instructing transition to a state of performing sound recording for recording the message attached to the document to be printed. The button BUA is a GUI element for instructing to complete property change on the property screen.

As ACT 4, the processor 10 waits for some operation to be performed. Then, if the operation is received by the input unit 13, the processor 10 determines that the result in ACT 4 is YES and proceeds to ACT 5.

As ACT 5, the processor 10 checks whether or not the operation performed is an operation for instructing transition to the state of performing video recording. If the instructor wants to record a message, the instructor performs a predetermined operation such as clicking the tab TAA and instructs to transition to the state of performing video recording. If such an instruction is issued, the processor 10 determines in ACT 5 that the result is YES and proceeds to ACT 6.

As ACT 6, the processor 10 changes the property screen to a display state for a video recording operation.

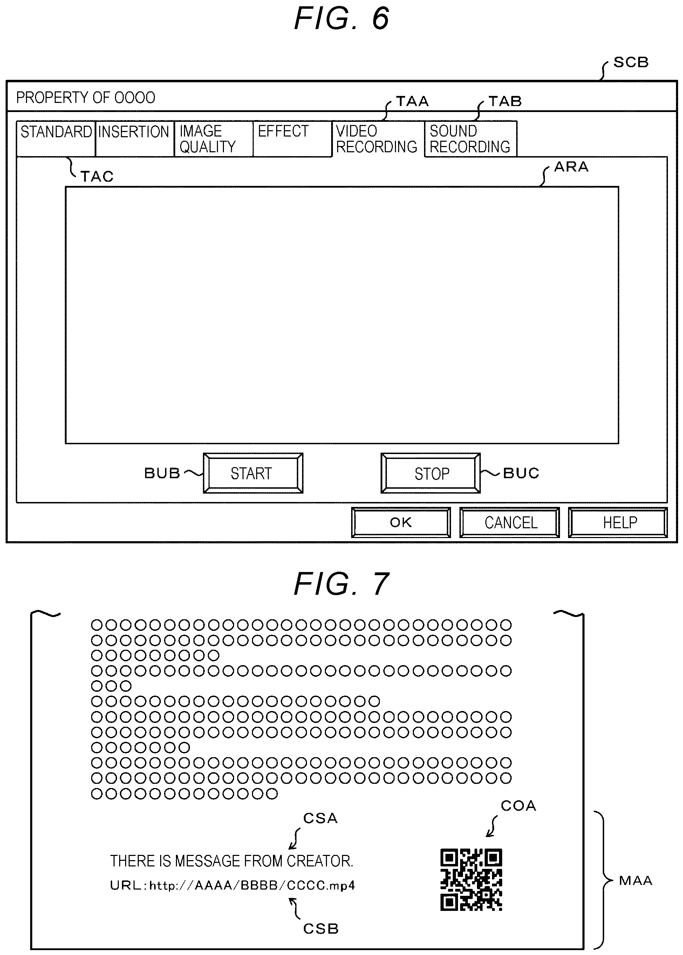

FIG. 6 is a diagram illustrating an example of a property screen SCB. Among display elements illustrated in FIG. 6, the same display elements as those illustrated in FIG. 5 are designated by the same reference numerals, and the description thereof will be omitted.

The property screen SCB illustrated in FIG. 6 is an example of a screen after the processor 10 updates the screen in ACT 6.

The property screen SCB represents a display area ARA, a tab TAC, and buttons BUB and BUC. The display area ARA is an area for displaying a video image represented by video image data output by the camera 15. However, in FIG. 5, illustration of a specific image is omitted. The tab TAC is a GUI element for instructing the display of the property related to the category called "standard". The button BUB is a GUI element for instructing to start video recording. The button BUC is a GUI element for instructing to stop the video recording.

As ACT 7, the processor 10 waits for some operation to be performed. Then, if the operation is received by the input unit 13, the processor 10 determines that the result in ACT 7 is YES and proceeds to ACT 8.

As ACT 8, the processor 10 checks whether or not the operation performed is an operation for instructing the start of video recording. The instructor issues an instruction to start video recording by a predetermined operation such as clicking the button BUB after setting the instructor himself or herself to be in a state of being reflected in the camera 15. If such an operation is performed, the processor 10 determines that the result in ACT 8 is YES and proceeds to ACT 9. If an operation for an instruction other than the instruction to start video recording is performed, the processor 10 determines in ACT 8 that the result is NO and checks the content of the instruction, the processor 10 proceeds to another process for executing the function according to the content of the instruction. The processor 10 may, for example, execute a process of checking that the tab TAC is clicked and returning to ACT 3 as another process. The processor 10 may return to ACT 7 after executing another process. The processor 10 may end the drive process after executing another process.

As ACT 9, the processor 10 executes information processing (hereinafter, referred to as a video recording process) based on the video recording application PRB, in parallel with the drive process. Then, in the video recording process, the processor 10 starts generating a multimedia file from the video image data output from the camera 15 and the voice data output from the microphone 16 and storing the generated multimedia file in the auxiliary storage unit 12. The multimedia file is a data file including video image data and voice data.

As ACT 10, the processor 10 waits for an instruction to stop video recording. If the instructor wants to stop the video recording, the instructor instructs the stop of the video recording by a predetermined operation such as clicking the button BUC. Then, the processor 10 determines in ACT 10 that the result is YES and proceeds to ACT 11.

As ACT 11, the processor 10 stops generating the multimedia file by the video recording process and storing the multimedia file. After that, the processor 10 returns to the waiting state in ACT 7.

During a video recording period realized in this way, the multimedia file generated by the instructor giving an explanation about the document intended to be printed becomes a data file containing video image data and voice data as message data representing a message of the instructor. That is, in this case, the processor 10 acquires both video image data and voice data as the message data.

If the operation performed while the property screen SCA is displayed is not an operation for instructing transition to the state of performing video recording, the processor 10 determines in ACT 5 that the result is NO, and proceeds to ACT 12.

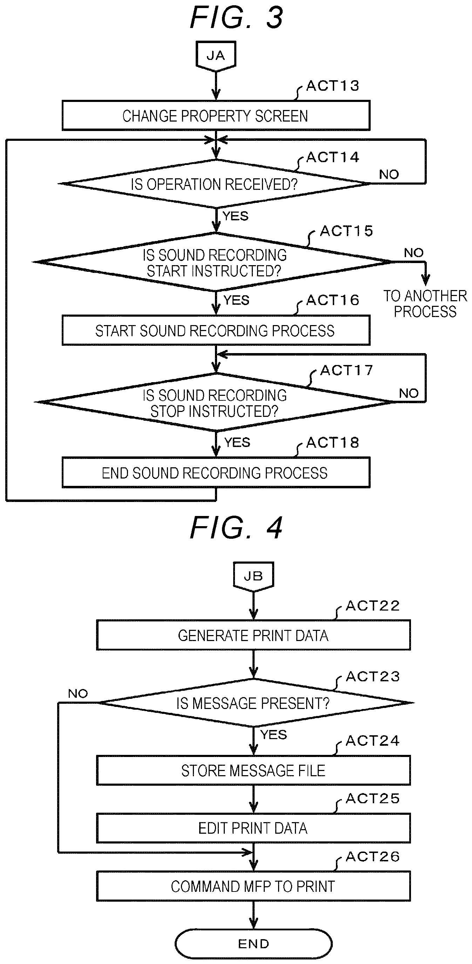

As ACT 12, the processor 10 checks whether or not the operation performed is an operation for instructing transition to the state of performing sound recording. If the instructor wants to record a message, the instructor instructs to transition to the state of performing sound recording by a predetermined operation such as clicking the tab TAB. If such an instruction is issued, the processor 10 determines in ACT 12 that the result is YES, and proceeds to ACT 13 in FIG. 3.

As ACT 13, the processor 10 changes the property screen to a display state for a sound recording operation. The property screen in this state represents, for example, a button for instructing the start of sound recording and a button for instructing the stop thereof.

As ACT 14, the processor 10 waits for some operation to be performed. Then, if the operation is received by the input unit 13, the processor 10 determines that the result in ACT 14 is YES and proceeds to ACT 15.

As ACT 15, the processor 10 checks whether or not the operation performed is an operation for instructing the start of sound recording. If the corresponding operation is performed, the processor 10 determines that the result in ACT 15 is YES and proceeds to ACT 16. If an operation for an instruction other than the instruction to start sound recording is performed, the processor 10 determines that the result in ACT 15 is NO, checks the content of the instruction, and proceeds to another process for executing the function according to the content of the instruction. The processor 10 may, for example, execute a process of checking that the tab TAC is clicked and returning to ACT 3 as another process. The processor 10 may return to ACT 14 after executing another process. The processor 10 may end the drive process after executing another process.

As ACT 16, the processor 10 executes information processing (hereinafter, referred to as a sound recording process) based on the sound recording application PRC, in parallel with the drive process. Then, in the sound recording process, the processor 10 starts generating a voice file from the voice data output from the microphone 16 and storing the generated voice file in the auxiliary storage unit 12.

As ACT 17, the processor 10 waits for an instruction to stop sound recording. Then, if the corresponding operation is performed, the processor 10 determines that the result in ACT 17 is YES and proceeds to ACT 18.

As ACT 18, the processor 10 stops generating the voice file by the sound recording process and storing the voice file. After that, the processor 10 returns to the waiting state in ACT 14.

During a sound recording period realized in this way, the voice file generated by the instructor giving an explanation about the document intended to be printed becomes a data file containing voice data as message data representing a message of the instructor. That is, in this case, the processor 10 acquires voice data as the message data.

If the operation performed while the property screen SCA is displayed is not an operation for instructing transition to the state of performing sound recording, the processor 10 determines in ACT 12 in FIG. 2 that the result is NO, and proceeds to ACT 19.

As ACT 19, the processor 10 checks whether or not completion of checking and change of the property is instructed. If checking and changing the property are finished, the instructor instructs the completion by a predetermined operation such as clicking the button BUA. If such an instruction is issued, the processor 10 determines that the result in ACT 19 is YES and proceeds to ACT 20. If an operation for an instruction other than the completion instruction is performed, the processor 10 determines that the result in ACT 19 is NO, checks the content of the instruction, and proceeds to another process for executing the function according to the content of the instruction. The processor 10 may execute a process for changing a property as another process in response to an operation on the property screen being displayed. The processor 10 may execute a process of displaying a property screen related to a property of another category as another process in response to an operation on the property screen being displayed. The processor 10 may return to ACT 4 after executing another process. The processor 10 may end the drive process after executing another process.

As ACT 20, the processor 10 determines the setting changed by the process if the process for changing the property has been performed until now.

As ACT 21, the processor 10 waits for a new instruction about printing using the MFP 2 from information processing according to an application program such as a word processor that handles a document. Then, if any instruction is issued, the processor 10 determines the result in ACT 21 is YES, and returns to ACT 1.

If the instruction received when starting the drive process or the instruction received during waiting in ACT 21 is an instruction to execute printing, the processor 10 determines in ACT 2 that the result is YES, and proceeds to ACT 22 in FIG. 4.

As ACT 22, the processor 10 generates print data. The print data is data to be given to the MFP 2 in order to print the document designated as a print target by the network print function of the MFP 2. The print data includes image data about the document. The data to be printed is predetermined as specifications of the MFP 2. The process by the processor 10 for generating the print data may be the same as the process based on another existing printer driver conforming to the specifications of the MFP 2, for example.

As ACT 23, the processor 10 checks whether or not a message to be attached to the document designated as the print target is present. The processor 10 checks, for example, whether or not message data generated in the current drive process is present. If the processor 10 returns to the waiting state in ACT 1 and ACT 2 after executing ACT 9 in FIG. 2 or ACT 16 in FIG. 3, the message data is stored in the auxiliary storage unit 12. Therefore, the processor 10 determines, in this case, that the result in ACT 23 is YES, and proceeds to ACT 24.

As ACT 24, the processor 10 stores the message file stored in the auxiliary storage unit 12 in the MFP 2. Specifically, for example, the processor 10 sends request data, which contains the corresponding message file and requests storage of the corresponding message file, to the MFP 2, as a destination, from the communication unit 18 to the communication network 3. In the MFP 2, if the request data is transmitted to the MFP 2 by the communication network 3 and received by the communication unit 27, the processor 20 stores the message file contained in the request data in the file storing part STA of the auxiliary storage unit 22. Thus, the processor 10 stores the message data contained in the message file in the auxiliary storage unit 22 as an example of the storage device.

As ACT 25, the processor 10 edits the print data generated in ACT 22. The editing is performed in order to add an image (hereinafter, referred to as an additional image) representing a URL for accessing the message file stored in the MFP 2 in ACT 24 to the document to be printed. The processor 10 combines an additional image with the margin of the document to be printed, for example.

FIG. 7 is a diagram illustrating an example of one page of a document printed based on edited print data.

In FIG. 7, characters to be represented in the document to be printed are omitted and represented as circle marks. An additional image representing character strings CSA and CSB and a two-dimensional code COA is combined with a margin MAA without these characters.

The character string CSA is a character message for notifying that a message from a creator of the document is present. The character string CSB represents a URL for accessing the message in characters. The two-dimensional code COA represents data for causing a two-dimensional code reader to read the URL for accessing the message.

If the print data is edited as described above, the processor 10 proceeds to ACT 26. If the processor 10 is not executing ACT 9 in FIG. 2 or ACT 16 in FIG. 3 and no message data is stored in the auxiliary storage unit 12, the processor 10 determines in ACT 23 that the result is NO, and proceed to ACT 26 by bypassing ACT 24 and ACT 25.

As ACT 26, the processor 10 commands the MFP 2 to print. The processor 10 sends, for example, print data edited in ACT 25 when proceeding from ACT 25 to ACT 26 and command data, which contains the print data generated in ACT 22 when proceeding from ACT 23 to ACT 26 and is for commanding printing of an image represented by the print data, to the MFP 2, as a destination, from the communication unit 18 to the communication network 3. Then, the processor 10 ends the drive process.

In the MFP 2, if the command data is transmitted to the MFP 2 by the communication network 3 and received by the communication unit 27, the processor 20 causes the print unit 25 to perform printing based on the print data included in the command data.

Thus, if the processor 10 executes ACT 25, and thereby the edited print data is contained in the command data, the document, in which the additional image is combined, as illustrated in FIG. 7, for example, is printed.

The URL represented in the additional image may be determined, for example, by the processor 10 in the computer terminal 1 or by the processor 20 in the MFP 2. However, in any case, the access via the communication network 3 by the URL is determined to be received, by the processor 20 in the MFP 2, as access to the message file stored in the file storing part STA. If the URL is determined by the processor 20 in the MFP 2, the URL is notified from the processor 20 to the processor 10, along with ACT 24 in FIG. 4.

If a recipient of the document printed in this way attempts web access using the URL represented in the additional image, for example, from a computer terminal 4, the processor 20 responds in the MFP 2 and causes the video image and voice represented by the message file identified by the URL, or the voice to be reproduced on the computer terminal 4. Thus, the URL is an example of an identifier for identifying message data. Therefore, the processor 10 instructs the MFP 2 to print an image in which the additional image representing the URL is combined with the image representing the document, thereby instructing the MFP 2 as the image forming apparatus to form the target image and the additional image.

As described above, by executing information processing based on the printer driver PRA recorded in the media MEA by the processor 10, a multimedia file or a voice file for explaining the document can be generated and saved, as a part of the work for printing the document. Then, since the computer terminal 1 combines the additional image representing the URL for accessing the multimedia file or the voice file with the document and prints the combined additional image, the recipient of the document can easily access a moving image file or a voice file.

Since both the moving image file and the voice file can be recorded, a moving image message and a voice message can be appropriately provided to be suitable for the content of the message.

Since a two-dimensional code representing the URL is represented in the additional image, the URL can be easily input to a terminal such as the computer terminal 4 used for web access.

Since the message file is stored in the auxiliary storage unit 22 provided in the MFP 2 that prints the document, there is no need to prepare a separate server device or the like.

At least one embodiment can be modified in various ways as follows.

The processor 10 may use the moving image file or the voice file already stored in the auxiliary storage unit 12 as message data. Alternatively, the processor 10 may acquire the message data via the communication network 3. That is, a way of acquiring the message data by the processor 10 may be freely selected.

As a storage device for storing the message data, the auxiliary storage unit 12 of the computer terminal 1 or a storage device provided in another apparatus such as a server device capable of communicating with the computer terminal 1 via the communication network 3 may be used. However, the apparatus including the storage device has a function of transmitting the message data identified by a designated URL for an access from the outside.

The processor 10 may acquire only the video image data as the message data.

The processor 10 may display a screen for control by a process based on the video recording application PRB or the sound recording application without displaying the screen for video recording control, such as the property screen SCB, or the screen for sound recording control in the drive process.

The processor 10 may also print the additional image on the same page as the image in the document. The processor 10 may also print the additional image as an image on a page different from the image in the document.

For example, if only one MFP 2 is connected to the communication network 3, or if there is only one storage device in which the message file is stored, such as in the storage device of a common server device regardless of which of the plurality of MFPs 2 is used to print the document, the processor 10 may represent only the file name of the message file as an identifier in the additional image.

If the processor 10 uses only the LAN as the communication network 3, for example, an address different from the URL may be represented in the additional image instead of the URL

The processor 10 may represent only one of the character string CSB representing the URL and the two-dimensional code COA in the additional image.

The processor 10 may appropriately represent another kind of optically readable visible code, such as a one-dimensional bar code in the additional image, instead of the two-dimensional code COA.

If the processor 10 finishes ACT 11 in FIG. 2 or ACT 18 in FIG. 3 and then proceeds to ACT 9 in FIG. 2 or ACT 16 in FIG. 3, the processor 10 may leave the message files already stored in the auxiliary storage unit 12 as valid files, and may set the plurality of message files as files to be stored in ACT 24 of FIG. 4, and may store only the most recently obtained message file as a valid file in the auxiliary storage unit 12, and may set the one message file as a file to be stored in ACT 24 of FIG. 4.

While certain embodiments have been described, these embodiments have been presented by way of example only, and are not intended to limit the scope of the inventions. Indeed, the novel apparatus and methods described herein may be embodied in a variety of other forms. Furthermore, various omissions, substitutions and changes in the form of the apparatus and methods described herein may be made without departing from the scope of the inventions. The accompanying claims and their equivalents are intended to cover such forms or modifications as would fall within the scope of the inventions.

## Claims

1. A non-transitory computer-readable medium storing computer-executable instructions that, when executed by one or more processors, perform operations comprising:
inputting a designation of a target image to be formed;
acquiring message data, the message data comprising at least one of video image data and voice data;
storing the acquired message data in a storage device; and
instructing an image forming apparatus to form an image designated as the target image and to form an image representing an identifier for identifying the message data stored in the storage device.

2. The medium of claim 1, wherein the operations further comprise:
causing a display to display a user interface screen for operating at least one of a video recording function and a sound recording function provided in the computer; and
controlling the video recording function and the sound recording function in response to an operation on the user interface screen displayed.

3. The medium of claim 1 or 2, wherein the operations further comprise:
generating an additional image representing the identifier as an image on the same page as the image designated as the target image; and
instructing the image forming apparatus to form the image on the page.

4. The medium of claim 3, wherein the generated additional image is combined with the image designated as the target image.

5. The medium of any one of claims 1 to 4, wherein the operations further comprise:
generating an additional image representing the identifier as an image on a page different from the image designated as the target image; and
instructing the image forming apparatus to form the image designated as the target image and to form the generated additional image.

6. The medium of any one of claims 1 to 5, wherein
the storage device is provided in the image forming apparatus, and
the image forming apparatus is configured to store the acquired message data in the storage device.

7. The medium of claim 6, wherein the operations further comprise:
instructing the image forming apparatus to execute image formation in response to an operation for instructing execution of image formation; and
requesting the image forming apparatus to store the acquired message data in the storage device in response to the operation.

8. The medium of any one of claims 1 to 7, wherein the operations further comprise instructing the image forming apparatus to form an image including the identifier for identifying the message data stored in the storage device and representing an address for accessing the message data via a communication network.

9. The medium of claim 8, wherein the operations further comprise instructing the image forming apparatus to form an image representing a uniform resource locator (URL) as the address.

10. The medium of claim 8 or 9, wherein the operations further comprise instructing the image forming apparatus to form an image including the identifier for identifying the message data stored in the storage device and representing a visible code that enables an address for accessing the message data via the communication network to be optically readable.

11. An information processing system comprising:
a processor configured to:
input a designation of a target image to be formed;
acquire message data, the message data comprising at least one of video image data and voice data;
store the acquired message data; and
instruct an image forming apparatus to form an image designated as the target image and to form an image representing an identifier for identifying the message data stored.

12. The information processing system of claim 11, wherein the processor is further configured to:
cause a display for operating at least one of a video recording function and a sound recording function; and
control the video recording function and the sound recording function in response to an operation on the display.

13. The information processing system of claim 11, wherein the processor is further configured to:
generate an additional image representing the identifier as an image on the same page as the image designated as the target image; and
instruct the image forming apparatus to form the image on the page.

14. The information processing system of claim 13, wherein the generated additional image is combined with the image designated as the target image.

15. An information processing method comprising steps of:
inputting a designation of a target image to be formed;
acquiring message data, the message data comprising at least one of video image data and voice data;
storing the acquired message data in a storage device; and
instructing an image forming apparatus to form an image designated as the target image and to form an image representing an identifier for identifying the message data stored in the storage device.
